(19) Europäisches Patentamt
European Patent Office
Office européen des brevets

(11) Publication number: **0 291 590 B1**

(12) **EUROPEAN PATENT SPECIFICATION**

(45) Date of publication of patent specification: **30.09.92**

(51) Int. Cl.5: **C04B 24/16**, B01F 17/00

(21) Application number: **87304425.9**

(22) Date of filing: **19.05.87**

(54) **Cement dispersant.**

(43) Date of publication of application:
**23.11.88 Bulletin 88/47**

(45) Publication of the grant of the patent:
**30.09.92 Bulletin 92/40**

(84) Designated Contracting States:
**DE GB IT**

(56) References cited:
**EP-A- 0 095 695**
**EP-A- 0 190 353**
**DE-A- 3 123 732**
**US-A- 3 312 671**

**CHEMICAL ABSTRACTS, vol. 107, no. 12, 21st September 1987, page 324, column 1, abstract no. 101707u, Columbus, Ohio, US; T. TSUBAKIMOTO et al.: "Cement dispersant"; & JP - A - 62 119 147 (NIPPON SHOKUBAI KAGAKU KOGYO CO., LTD.) 30-05-1987**

**Patent Abstracts of Japan, vol. 10, No. 185, (C-357)(2241) Abstract No. 61-31450 (27. 6. 86)**

(73) Proprietor: **NIPPON SHOKUBAI CO., LTD.**
**1-1, Koraibashi, 4-chome**
**Chuo-ku, Osaka-shi(JP)**

(72) Inventor: **Tsubakimoto, Tsuneo**
**10-4, 2-chome, Shinsenri Kitamachi**
**Toyonaka-shi Osaka-fu(JP)**
Inventor: **Tahara, Hideyuki**
**1-49, 3-chome, Minamieguchi**
**Higashiyodogawa-ku**
**Osaka-shi Osaka-fu(JP)**
Inventor: **Kobayashi, Hiroya**
**344-1, Oaza Onohara**
**Minoh-shi Osaka-fu(JP)**
Inventor: **Hirata, Tsuyoshi**
**5-1-504, Nishi-machi**
**Takatsuki-shi Osaka-fu(JP)**
Inventor: **Ito, Hiroshi**
**9-27-1402, 3-chome, Nankonaka Suminoe-ku**
**Osaka-shi Osaka-fu(JP)**

(74) Representative: **Rees, David Christopher et al**
**Kilburn & Strode 30 John Street**
**London WC1N 2DD(GB)**

**EP 0 291 590 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a cement dispersant. More specifically, it relates to a cement dispersant to be used in mortar works and concrete works for the purpose of improving the efficiency of operations to be performed, enhancing the strength and durability of products to be obtained, repressing the tendency of products toward cracking, and improving other physical properties of products.

Preferably, lignin sulphonates salts, such as of gluconic acid and glucoheptoic acid, napthalene sulphonic acid-formaldehyde condensation salt, and polysaccharide have been used as cement dispersants. The lignin sulphonates are obtained from processes for the production of sulphite pulp. They have the disadvantage that their water-reducing effects are dispersed and their increased incorporation of air brings about adverse effects on the physical products of the mortar and concrete structures to be produced. The salts of gluconic acid and glucoheptoic acid are such that when they are added in large amounts for the purpose of ensuring high flowability, they result in considerable retardation and impairment of hardening, possibly to the extent of rendering them useless. Starch hydrolyzate is a polysaccharide type cement dispersant. When this cement dispersant is used by itself, it conspicuously shows a tendency to retard the hardening. It is, therefore, used generally in combination with calcium chloride or triethanolamine. Unfortunately, calcium chloride is harmful to the prevention of reinforcing steel bars from rusting.

Cement dispersants of the naphthalene sulphonic acid-formaldehyde condensation salt type excel in their efficiency in water-reduction and allow high flowability without entailing any considerable retardation of hardening and, therefore, they have found extensive utility as high-range water-reducing agents for the manufacture of concrete products and as super plasticisers for ready-mixed concrete.

Cement dispersants of the naphthalene sulphonic acid-formaldehyde condensates salt type, however, suffer from the disadvantage that their water-reducing effects are observed for only a short period and their so-called slump loss is so conspicuous that the flowability (slump) of concrete notably decreases after 20 to 30 minutes following the addition of the dispersant. In a plant for the manufacture of concrete products in which a cement composition such as mortar or concrete is conveyed under the pressure by a pump, for example, the conveyance by the pump is sometimes suspended temporarily at lunchtime or because of a mechanical problem. Subsequently it is restarted and the pressure for the conveyance may be sharply increased possibly to the extent of clogging the pump or inducing another similar mechanical trouble. When the cement composition is placed in a mould and the subsequent forming operation on the cement composition e.g. by compaction, is delayed for some reason or other incomplete filling may result.

Furthermore , where a cement dispersant is used in ready-mixed concrete, the incorporation of the cement dispersant cannot be carried out in the manufacturing plant for the ready-mixed concrete and must therefore be made in the immediate neighbourhood of the site where the concrete is to be used. Unfortunately, the high-speed agitation of the added cement dispersant in the concrete in the mixer car may well result in unacceptable noise. This cement dispersion may also cause the pump being used for the purpose of conveying the concrete to suffer from mechanical trouble or may result in incomplete filling of the mould.

It is therefore an object of the present invention, to provide cement dispersant which allows high flowability without entailing any appreceiable retardation of hardening, which permits the high flowability over a long period of time, which ensures stable workability, and which excels in the ability to curb the phenomenon of slump loss.

US-A-4558092 discloses an aqueous dispersion of a copolymer obtained by emulsion polymerisation. The copolymer is a cement additive for joint sealer compositions, road pavement compositions etc. It is used in large amounts ( 20% by weight of the cement) and serves to improve the adhesion of the mortar and its water tight properties.

US-A-3312671 discloses a water-soluble anionic copolymer of 2-sodiosulphoethyl acrylate and acrylamide. This material is for use as a flocculant and not a cement dispersant.

JP-A-59151187 discloses a water swelling material made by dispersing a water insoluble water absorbing resin in a base material composed of a thermosetting resin and/or other.

US-A-4450013 is concerned with compositions which are used as auxiliaries for pigment grinding and as dispersing agents for pigments. The reference teaches that aqueous slurries of low viscosity pigments which are effected for controlling paper size can be obtained by using certain copolymers.

Accordingly the present invention provides the use of a cement dispersant, characterised in that the material includes a main component comprising at least one water-soluble polymer selected from the group consisting of polymers obtained from (A) 0.1 to 100 mol% of a sulphonic acid type monomer represented by the formula I:

$$(CH_2 = \overset{\overset{R}{|}}{C}-CO_2--(AO)_m-B-SO_3)nX \qquad (I)$$

wherein: R stands for a hydrogen atom or a methyl group; n = 1 or 2, when n = 1 X stands for a hydrogen atom, a monovalent metallic atom, an ammonium group, or an organic amine group and when n = 2 X stands for a divalent metallic atom; A and B independently stand for an alkylene group of 2 to 4 carbon atoms; m stands for 0 or an integer of the value of 1 to 100; and the alkylene oxide group of 2 to 4 carbon atoms in the portion, $(AO)_m$ may be bound in any desired sequence; and (B) 99.9 to 0 mol% of another monomer copolymerisable with the sulphonic acid type monomer, and polymers obtained by neutralising the polymers with an alkaline substance.

The process also extends to a process for dispersing cement in water by the use of such a dispersant.

The monomer (A) to be used for the present invention is a sulfonic acid type monomer represented by the formula I.

$$CH_2=\overset{\overset{R}{|}}{C}-CO_2-(AO)_m-B-SO_3X \qquad (I)$$

In the formula, R stands for hydrogen atom or methyl group, X stands for hydrogen atom, a monovalent metallic atom (preferably an alkali metal, especially sodium or potassium,), a divalent metallic atom (preferably an alkaline earth metal, especially calcium or magnesium), ammonium group, or an organic amine group preferably an alkanolamine group, especially a monoethanolamine group or a diethanolamine group or triethanolamine group, A stands for an alkylene group having 2 to 4, more desirably 2 or 3, and most desirably 2, carbon atoms, B stands for an alkylene group having 2 to 4, preferably 2 to 3, carbon atoms, m stands for 0 or an integer of the value of 1 to 100, preferably 0 or an integer of the value of 1 to 50, and the alkylene oxide group of 2 to 4 carbon atoms in the portion, $(AO)_m$, may be bound in any desired sequence.

Examples of the organic amine include alkyl amines such as methylamine, dimethylamine, trimethylamine, ethylamine, diethylamine, triethylamine, isopropylamines, and butylamines; alkanolamines such as monoethanolamine, diethanolamine, triethanolamine, and isopropanolamines; and pyridines.

As typical examples of the sulfonic acid type monomer (A), there can be cited sulfoalkyl (meth)acrylates such as 2-sulfoethyl (meth)acrylate, 2-sulfopropyl (meth)acrylate, 3-sulfopropyl (meth)acrylate, 1-sulfopropan-2-yl (meth)acrylate, 2-sulfobutyl (meth)acrylate, 3-sulfobutyl (meth)acrylate, 4-sulfobutyl (meth)-acrylate, 1-sulfobutan-2-yl (meth)acrylate, 1-sulfobutan-3-yl (meth)acrylate, 2-sulfobutan-3-yl (meth)acrylate, 2-methyl-2-sulfopropyl (meth)acrylate, 2-methyl-3sulfopropyl (meth)acrylate, and 1,1-dimethyl-2-sulfoethyl (meth)acrylate, and monovalent metal salts, divalent metal salts, ammonium salts, and organic amine salts of the sulfoalkyl (meth)acrylates; and sulfoalkoxy polyalkylene glycol mono(meth)acrylates such as sulfoethoxy polyethylene glycol mono(meth)acrylate, sulfopropoxy polyethylene glycol mono(meth)acrylate, sulfobutoxy polyethylene glycol mono(meth)acrylate, sulfoethoxy polypropylene glycol mono(meth)acrylate, sulfopropoxy polypropylene glycol mono(meth)acrylate, and sulfobutoxy polypropylene glycol mono(meth)-acrylate, monovalent metal salts, divalent metal salts, ammonium salts, and organic amine salts of the sulfoalkoxy polyalkylene glycol mono(meth)acrylates. One member or a mixture of two or more members selected from the group cited above can be used.

The monomer (B) which is optionally used in the present invention is a monomer which is copolymerizable with the sulfonic acid type monomer (A). As examples of the monomer (B), there can be cited unsaturated carboxylic acids such as acrylic acid, methacrylic acid, maleic acid, fumaric acid, and itaconic acid, monovalent metal salts, divalent metal salts, ammonium salts and organic amine salts of the unsaturated carboxylic acids; esters of unsaturated carboxylic acids with aliphatic alcohols of 1 to 20, preferably 1 to 4, carbon atoms or with monoalkoxyalkylene alcohols having an alkylene oxide of 2 to 4, more desirably 2 or 3, and most desirably 2, carbon atoms added in an amount in the range of 1 to 100 mols, preferably 1 to 50 mols, to aliphatic alcohols of 1 to 20, preferably 1 to 4, carbon atoms, preferably acrylic and methacrylic acid esters and alkoxyalkylene glycol (meth)acrylates; (meth)acrylamides; acetic

alkenyl esters such as vinyl acetate and propenyl acetate; aromatic vinyls such as styrene, p-methyl styrene, styrene sulfonic acid; and vinyl chloride. One member or a mixture of two or more members selected from the group cited above can be used.

The copolymerizable monomer (B) can be used in an amount such that the polymer or the alkali neutralization product thereof will become soluble in water. There are indications that when an unsaturated carboxylic acid or a salt thereof among other copolymerizable monomers (B) enumerated above is selected to be used in combination with the sulfonic acid type mononer (A), the polymer and/or alkali neutralization product thereof to be consequently obtained manifests a particularly satisfactory cement dispersing ability. Generally, the copolymerizable monomer (B) is used in an amount in the range of 99.9 to 0 mol% while the sulfonic acid type monomer (A) is used in an amount in the range of 0.1 to 100 mol%. More desirably, the copolymerizable monomer (B) is used in an amount in the range of 99 to 0 mol% while the monomer (A) is used in an amount in the range of 1 to 100 mol%. Most desirably, the copolymerizable monomer (B) is used in an amount in the range of 90 to 0 mol% while the monomer (A) is used in an amount in the range of 10 to 100 mol%.

The polymer contemplated to be used in the present invention can be produced by polymerizing the aforementioned monomer components by the use of a polymerization initiator. The polymerization can be carried out in a solvent or can be effected in the form of bulk polymerization.

The polymerization in a solvent can be effected either batchwise or continuously. Examples of the solvent effectively usable herein include water; lower alcohols such as methanol, ethanol, isopropanol, and butanols; aromatic and aliphatic hydrocarbons such as benzene, toluene, xylene, cyclohexane, and n-hexane; ethyl acetate; and ketone compounds such as acetone and methyl ethyl ketone.

In view of the solubility of the monomers as the raw materials and the polymer as the product and the ease of the use of the produced polymer, it is desirable to use as the solvent either water or at least one member selected from the group consisting of lower alcohols having 1 to 4 carbon atoms. Among other lower alcohols of 1 to 4 carbon atoms, methanol, ethanol, or isopropanol is used particularly advantageously.

When the polymerization is to be carried out in an aqueous medium, a water-soluble polymerization initiator such as persulfate of ammonium or an alkali metal or hydrogen peroxide is used to initiate the polymerization. In this case, an accelerator such as sodium hydrogen sulfite may be used in combination with the polymerization initiator. When the polymerization is to be carried out by using as a solvent a lower alcohol, an aromatic hydrocarbon, an aliphatic hydrocarbon, ethyl acetate, or a ketone compound, there may be used as a polymerization initiator a peroxide such as benzoyl peroxide or lauroyl peroxide, a hydroperoxide such as cumene hydroperoxide, or an aliphatic azo compound such as azo-bis-isobutyronitrile. The amount of the polymerization initiator to be used is in the range of 0.01 to 20% by weight, preferably 0.1 to 10% by weight, based on the total amount of the monomers to be used. In this case, such an accelerator as an amine compound may be used in combination with the polymerization initiator. When the polymerization is to be carried out in a mixed solvent containing water and a lower alcohol, a suitable polymerization initiator may be selected from the group of the various polymerization initiators mentioned above or from the group of combination of polymerization initiators and accelerators mentioned above. Though the polymerization temperature is suitably fixed depending on the solvent and the polymerization initiator to be used, it generally falls in the range of 0° to 120°C, preferably 30° to 100°C.

The bulk polymerization requires to use as a polymerization initiator a peroxide such as benzoyl peroxide or lauroyl peroxide, a hydroperoxide such as cumene hydroperoxide, or an aliphatic azo compound such as azo-bis-isobutyronitrile. The amount of the polymerization initiator to be used is in the range of 0.01 to 20% by weight, preferably 0.1 to 10% by weight, based on the total amount of the monomers to be used. The reaction is carried out at a temperature in the range of 50° to 150°C, preferably 50°C to 120°C.

The polymer to be obtained as described above can be used even in its unmodified form as the principal component for the cement dispersant. The polymer may be neutralized, when necessary, with an alkaline substance and used in the neutralized form as the main component for the cement dispersant. Examples of the alkaline substance advantageously used for this neutralization include hydroxides, oxides, and carbonates of monovalent metals and divalent metals; ammonia, and organic amines.

The average molecular weight of the polymer can fall in a wide range of 1,000 to 100,000, preferably 2,000 to 50,000.

The polymer and/or the neutralization product thereof can be used all by itself or in the form of a mixture with some other substance as the cement dispersant. When the polymer and/or the neutralization product thereof is used as a principal component in combination with a known cement additive. Example of

the known cement additive include conventional cement dispersants, air entraining agents, cement wetting and dispersing agents, waterproofing agents, strength enhancing agents, and hardening accelerators.

The cement dispersant used in the present invention can be used for such hydraulic cements as portland cement, alumina cement, and various mixed cements and for such hydraulic material as gypsum.

The actual use of the cement dispersant of the present invention can be effected by a method which comprises dissolving the cement dispersant in mixing water and subsequently adding the resultant solution as mixing water during the preparation of a cement composition or a method which comprises adding the cement dispersant to a cement composition which has been already mixed thoroughly.

The reason for the outstanding quality manifested by the cement dispersant of the present invention remains yet not to be found. This excellent quality may be logically explained by a supposition that the polymer derived from monomers including a monomer containing a terminal sulfonate group and/or the neutralization product thereof has a structure such that the main chain portions as the sites of adsorption for the surface of cement particles and the terminal sulfonate group portions oriented on the water layer side occur in a form bound through the medium of alkylene groups and polyalkyleneoxide groups and, as the result, when the aforementioned polymer is adsorbed on the surface of the cement particles, the orientation of the terminal sulfonate group on the water layer side is facilitated and the polymer is enabled to manifest an outstanding dispersing ability and a slump loss preventing ability.

There are indications that when a carboxylate group-containing monomer is selected from the various monomers (B) available and this monomer is copolymerized to give rise to a polymer and/or a neutralization product thereof incorporating therein a carboxylate group, the polymer or the neutralization product thereof possesses more desirable cement dispersing ability. An logical explanation of this fact calls for a postulate that the incorporation of the carboxylate group enhances the function of the adsorption sites on the polymer and brings about highly desirable results owing to the ability of dispersion manifested on the cement particles and the ability to curb the slump loss. Generally, oxycarboxylic acids such as gluconic acid and polycarboxylates such as polysodium acrylate are highly liable to retard hardening. It is considered that the polymer which is obtained in this invention by selecting a carboxylate group-containing monomer among other copolymerizable monomers (B) and copolymerizing this selected monomer minimally liable to retard hardening because it possesses a structure combining a sulfonate group and carboxylate group within one molecular unit.

The cement dispersant used in the present invention, however, is not limited in any sense by the reason offered above.

The cement dispersant used in the present invention enables the cement composition to manifest high flowability without entailing any appreciable retardation of hardening and possesses an outstanding ability to preclude slump loss and, in mortar works and concrete works, brings about a notable improvement in workability. Thus, the cement dispersant of the present invention can be used effectively as a high-performance water-reducing agent for the manufacture of products of concrete or as a super plasticizer of ready-mixed concrete.

Now the cement dispersant used in the present invention will be described more specifically below with reference to examples of synthesis and working examples. Of course, the present invention is not limited to these examples. Wherever percents (%) and parts are mentioned in the following examples, they are meant as % by weight and parts by weight unless otherwise specified.

Synthesis 1

In a glass reaction vessel provided with a thermometer, a stirrer, a dropping funnel, a $N_2$ gas inlet tube, and a reflux condenser, 37.2 parts of water was placed and kept stirred and, with the interior of the reaction vessel displaced with nitrogen, heated in an atmosphere of nitrogen up to 95° C.

Then, a monomer mixture solution containing 5 parts of sodium 2-sulfoethyl methacrylate, 15 parts of sodium acrylate, and 30 parts of water and 8.5 parts of an aqueous 5% ammonium persulfate solution were separately added to the reaction vessel over a period of 2 hours. After completion of their addition, 4.3 parts of an aqueous 5% ammonium persulfate solution was added thereto over 1 hour. After completion of this addition, the contents of the reaction vessel were kept at a temperature of 95° C for 1 hour, allowing the polymerization to complete. Consequently, there was obtained an aqueous 20% solution of a copolymer (1) having an average molecular weight of 5,000. The pH and viscosity of this aqueous 20% solution of the copolymer (1) were as shown in Table 1.

Synthesis 2

In a glass reaction vessel provided with a thermometer, a stirrer, a dropping funnel, a $N_2$ gas inlet tube, and a reflux condenser, 39.3 parts of water was placed and kept stirred and, with the interior of the reaction vessel displaced with nitrogen, heated in an atmosphere of nitrogen up to 95° C.

Then, a monomer mixture solution containing 10 parts of sodium 2-sulfoethyl methacrylate, 10 parts of sodium acrylate, and 30 parts of water and 7.1 parts of an aqueous 5% ammonium persulfate solution were separately added to the reaction vessel over a period of 2 hours. After completion of their addition, 3.6 parts of an aqueous 5% ammonium persulfate solution was added thereto over a period of 1 hour. After this addition, the contents of the reaction vessel were kept at a temperature of 95° C for 1 hour, allowing the polymerization to complete. Consequently, there was obtained an aqueous 20% solution of a copolymer (2) having an average molecular weight of 4,500. The pH and viscosity of this aqueous 20% solution of the copolymer (2) were as shown in Table 1.

Synthesis 3

In a glass reaction vessel provided with a thermometer, a stirrer, a dropping funnel, a $N_2$ gas inlet tube, and a reflux condenser, 41.4 parts of water was placed and kept stirred and, with the interior of the reaction vessel displaced with nitrogen, heated in an atmosphere of nitrogen up to 95° C.

Then, a monomer mixture solution containing 15 parts of sodium 2-sulfoethyl methacrylate, 5 parts of sodium acrylate, and 30 parts of water and 5.7 parts of an aqueous 5% ammonium persulfate solution were separately added thereto over a period of 2 hours. After completion of their addition, 2.9 parts of an aqueous 5% ammonium persulfate solution was added thereto over a period of 1 hour. After completion of this addition, the contents of the reaction vessel were kept at a temperature of 95° C for 1 hour, allowing the polymerization to complete. Consequently, there was obtained an aqueous 20% solution of a copolymer (3) having an average molecular weight of 3,500. The pH and viscosity of this aqueous 20% solution of the copolymer (3) were as shown in Table 1.

Synthesis 4

In a glass reaction vessel provided with a thermometer, a stirrer, a dropping funnel, a $N_2$ gas inlet tube, and a reflux condenser, 40.1 parts of water was placed and kept stirred and, with the interior of the reaction vessel displaced with nitrogen, heated in an atmosphere of nitrogen up to 95° C.

Then, a monomer mixture solution containing 9 parts of sodium 2-sulfoethyl acrylate, 9 parts of sodium acrylate, 2 parts of methoxy polyethylene glycol monoacrylate (average addition mol number of ethylene oxide 10), and 30 parts of water and 6.6 parts of an aqueous 5% ammonium persulfate were separately added thereto over a period of 2 hours. After completion of their addition, 3.3 parts of an aqueous 5% ammonium persulfate solution was added thereto over a period of 1 hour. After completion of this addition, the contents of the reaction vessel were kept at a temperature of 95° C for 1 hour, allowing the polymerization to complete. Consequently, there was obtained an aqueous 20% solution of a copolymer (4) having an average molecular weight of 5,000. The pH and viscosity of this aqueous solution of the copolymer (4) were as shown in Table 1.

Synthesis 5

In a glass reaction vessel provided with a thermometer, a stirrer, a dropping funnel, a $N_2$ gas inlet tube, and a reflux condenser, 42.8 parts of water was placed and kept stirred and, with the interior of the reaction vessel displaced with nitrogen, heated in an atmosphere of nitrogen up to 95° C.

Then, a monomer mixture solution containing 12 parts of sodium 3-sulfopropoxy polyethylene glycol monoacrylate (average addition mol number of ethylene oxide 10), 8 parts of sodium acrylate, and 30 parts of water and 4.8 parts of an aqueous 5% ammonium persulfate solution were separately added thereto over a period of 2 hours. After completion of their addition, 2.4 parts of an aqueous 5% ammonium persulfate solution was added thereto over a period of 1 hour. After completion of this addition, the contents of the reaction vessel were kept at a temperature of 95° C for 1 hour, allowing the polymerization to complete. Consequently, there was obtained an aqueous 20% solution of a copolymer (5) having an average molecular weight of 6,000. The pH and viscosity of this aqueous solution of the copolymer (5) were as shown in Table 1.

Synthesis 6

In a glass reaction vessel provided with a thermometer, a stirrer, a dropping funnel, a $N_2$ gas inlet tube, and a reflux condenser, 45.6 parts of water was placed and kept stirred and, with the interior of the reaction vessel displaced with nitrogen, heated in an atmosphere of nitrogen up to 95° C.

Then, a monomer mixture solution containing 20 parts of sodium 3-sulfopropoxy polyethylene glycol monomethacrylate (average addtion mol number of ethylene oxide 2) and 30 parts of water and 2.9 parts of an aqueous 5% ammonium persulfate solution were separately added thereto over a period of 2 hours. After completion of their addition, 1.5 parts of an aqueous 5% ammonium persulfate solution was added thereto over a period of 1 hour. After completion of this addition the contents of the reaction vessel were kept at a temperature of 95° C for 1 hour, allowing the polymerization to complete. Consequently, there was obtained an aqueous 20% solution of a polymer (6) having an average molecular weight of 4,500. The pH and viscosity of this aqueous solution of the polymer (6) were as shown in Table 1.

Synthesis 7

In a glass reaction vessel provided with a thermometer, a stirrer, a dropping funnel a $N_2$ gas inlet tube, and a reflux condenser, 9.2 parts of isopropanol was placed and kept stirred and, with the interior of the reaction vessel displaced with nitrogen, heated in an atmosphere of nitrogen up to the boiling point.

Then, a mixed solution containing 10 parts of 2-sulfoethyl methacrylate, 10 parts of methacrylic acid, 0.4 part of benzoyl peroxide, and 20 parts of isopropanol was added thereto over a period of 2 hours. After completion of this addition, a dispersion having 0.1 part of benzoyl peroxide dispersed in 1 part of isopropanol was added thereto in two split portions, each over a period of 1 hour. After completion of the addition, the contents of the reaction vessel were kept at the boiling point for 3 hours, allowing the polymerization to complete. Subsequently, 170 parts of water and 25.2 parts of triethanol amine were added thereto and the resultant mixture was distilled to expel isopropanol. Consequently, there was obtained an aqueous 20% solution of a copolymer (7) having an average molecular weight of 10,000. The pH and viscosity of this aqueous 20% solution of the copolymer (7) were as shown in Table 1.

Synthesis 8

In a glass reaction vessel provided with a thermometer, a stirrer, a dropping funnel, a $N_2$ gas inlet tube, and a reflux condenser, 9.2 parts of isopropanol was placed and kept stirred and, with the interior of the reaction vessel displaced with nitrogen, heated in an atmosphere of nitrogen up to the boiling point.

Then, a mixed solution containing 10 parts of 2-sulfoethyl methacrylate, 10 parts of methacrylic acid, 0.4 part of benzoyl peroxide, and 20 parts of isopropanol was added thereto over a period of 2 hours. After completion of this addition, a dispersion having 0.1 part of benzoyl peroxide dispersed in 1 part of isopropanol was added thereto in two split portions, each over a period of 1 hour. After completion of this addition, the contents of the reaction vessel were kept at the boiling point for 3 hours, allowing the polymerization to complete. Subsequently, a dispersion having 6.2 parts of calcium hydroxide dispersed in 110 parts of water was added and the resultant mixture was distilled to expel isopropanol. Consequently, there was obtained an aqueous 20% solution of a copolymer (8) having an average molecular weight of 7,000. The pH and viscosity of this aqueous 20% solution of the copolymer (8) were as shown in Table 1.

Synthesis 9

In a glass reaction vessel provided with a thermometer, a stirrer, a dropping funnel, a $N_2$ gas inlet tube, and a reflux condenser, 42.8 parts of water was placed and kept stirred and, with the interior of the reaction vessel displaced with nitrogen, heated in an atmosphere of nitrogen up to 95° C.

Then, a monomer mixture solution consisting of 18 parts of sodium 3-sulfopropoxy polyethylene glycol monoacrylate (average addition mol number of ethylene oxide 10), 2 parts of hydroxyethyl acrylate, and 30 parts of water and 4.8 parts of an aqueous 5% ammonium persulfate were separately added thereto over a period of 2 hours. After completion of their addition, 2.4 parts of an aqueous 5% ammonium persulfate solution was added thereto over a period of 1 hour. After completion of this addition, the contents of the reaction vessel were kept at a temperature of 95° C for 1 hour, allowing the polymerization to complete. Consequently, there was obtained an aqueous 20% solution of a copolymer (9) having an average molecular weight of 8,500. The pH and viscosity of this aqueous 20% solution of the copolymer (9) were as shown in Table 1.

Synthesis 10

In a glass reaction vessel provided with a thermometer, a stirrer, a dropping funnel, a $N_2$ gas inlet tube, and a reflux condenser, 47.0 parts of water was placed and kept stirred and, with the interior of the reaction vessel displaced with nitrogen, heated in an atmosphere of nitrogen up to 95° C.

Then, a monomer mixture solution consisting of 20 parts of sodium 3-sulfopropoxy polyethylene glycol monomethacrylate (average addition mol number of ethylene oxide 40) and 30 parts of water and 2.0 parts of an aqueous 5% ammonium persulfate solution were separately added thereto over a period of 2 hours. After completion of their addition, 1.0 part of an aqueous 5% ammonim persulfate solution was added thereto over a period of 1 hour. After completion of this addition, the contents of the reaction vessel were kept at a temperature of 95° C for 1 hour, allowing the polymerization to complete. Consequently, there was obtained an aqueous 20% solution of a polymer (10) having an average molecualr weight of 12,000. The pH and viscosity of this aqueous 20% solution of the polymer (10) were as shown in Table 1.

Table 1

| Synthesis | (Co)polymer | Aqueous 20% solution (Note 1) | |
|---|---|---|---|
| | | pH | Viscosity (cps) |
| 1 | Copolymer (1) | 7.3 | 9.9 |
| 2 | " (2) | 7.2 | 8.8 |
| 3 | " (3) | 7.1 | 8.1 |
| 4 | " (4) | 7.5 | 7.2 |
| 5 | " (5) | 7.2 | 9.0 |
| 6 | Polymer (6) | 7.1 | 8.5 |
| 7 | Copolymer (7) | 6.8 | 11.0 |
| 8 | " (8) | 7.0 | 10.5 |
| 9 | " (9) | 7.1 | 9.5 |
| 10 | Polymer (10) | 7.1 | 10.2 |

(Note 1) The pH and viscosity were measured at 25°C. The measurement of the viscosity was made with a viscosimeter, Model B, made by Seiki Kogyo Kenkyusho, at 60 rpm.

Example 1

An ordinary portland cement (produced by Sumitomo Cement Co., Ltd.) was used as a cement, a river sand produced in Yodo River (specific gravity 2.51 and fineness modulus 2.78) as a fine aggregate, a crushed stone produced at Takatsuki (specific gravity 2.68 and fineness modulus 6.73) as a coarse aggregate, and the copolymer (1) obtained in Synthesis 1 as a cement dispersant. In a tiltable mixer, these materials weighed out in the fixed proportions of 320 kg of the cement per $m^3$, 170 kg of water per $m^3$, (water/cement ratio 53%), 807 kg of the fine aggregate per $m^3$, 972 Kg of the coarse aggregate per $m^3$, and 0.25% (based on the cement ) of the cement dispersant, in such amounts as to give a total of 30 liters of the mixture were kneaded at a rate of 35 rpm for 3 minutes to give rise to a fluid concrete possessing a target slump of 21 cm and a target air content of 4.5% (where the air content failed to reach the target, a minute amount of an air entraining agent made by Yamaso Chemical and marketed under trademark designation of "Vinsol" was used). The fluid concrete immediately after the mixing was sampled and tested for slump and air content.

After completion of the mixing, the contents of the tiltable mixer was continuously mixed at a lowered rate of 3 rpm. The resultant mixture after 60 minutes' standing was sampled and tested for slump and air

content, to determine their changes by aging.

The consequently obtained fluid concrete was tested for compressive strength and setting time. The results of these measurement were as shown in Table 2.

The methods for the determination of slump, air content, compressive strength, and setting time and the method for collection of test specimens for the determination of compressive strength were invariably in conformity with the relevant specifications given in Japanese Industrial Standard (JIS A6204).

Examples 2-10

Fluid concretes were prepared by following the procedure of Example 1, excepting the (co)polymers (2) through (10) obtained in syntheses 2-10 were used in the respective amounts indicated in Table 2. They were tested for slump, air content, compressive strength, and setting time. The results were as shown in Table 2.

Control 1

A fluid concrete for comparison was obtained by following the procedure of Example 1, excepting a commercially available sodium naphthalenesulfonate-formalin condensate was used as a cement dispersant in an amount of 0.4% (based on cement) in the place of the copolymer (1). The fluid concrete was tested for slump, air content, compressive strength, and setting time. The results were as shown in Table 2.

Control 2

A fluid concrete for comparison was obtained by following the procedure of Example 1, excepting a commercially available sodium ligninsulfonate was used as a cement dispersant in an amount of 0.4% (based on cement) in the place of the copolymer (1). The fluid concrete was tested for slump, air content, compressive strength, and setting time. The results were as shown in Table 2.

Control 3

A fluid concrete for comparison was obtained by following the procedure of Example 1, excepting a commercially available polysodium acrylate (average molecular weight 5,000) was used as a cement dispersant in an amount of 0.3% (based on cement) in the place of the copolymer (1). The fluid concrete was tested for slump, air content, compressive strength, and setting time. The results were as shown in Table 2.

Table 2

| | | Cement dispersant used | | Immediately after mixing | | After 60 minutes' standing | | Residual ratio of slump (%) (Note 1) | Compressive strength at age of 28 days ($kg/cm^2$) | Setting time (hours and minutes) (beginning/ending) |
|---|---|---|---|---|---|---|---|---|---|---|
| | | Kind | Amount added (%) (based on cement) | Slump (cm) | Amount of air (%) | Slump (cm) | Amount of air (%) | | | |
| Example | 1 | Copolymer (1) | 0.25 | 21.2 | 4.0 | 16.5 | 4.2 | 78 | 370 | 6 : 26 /8 : 31 |
| " | 2 | " (2) | 0.25 | 20.8 | 4.3 | 16.2 | 4.3 | 78 | 379 | 6 : 03 /8 : 19 |
| " | 3 | " (3) | 0.30 | 21.0 | 4.0 | 15.9 | 4.3 | 76 | 376 | 5 : 54 /8 : 05 |
| " | 4 | " (4) | 0.20 | 21.1 | 4.8 | 17.9 | 4.5 | 85 | 371 | 6 : 12 /8 : 22 |
| " | 5 | " (5) | 0.20 | 21.7 | 4.7 | 18.0 | 4.9 | 83 | 369 | 6 : 19 /8 : 30 |
| " | 6 | Polymer (6) | 0.30 | 21.1 | 4.6 | 16.0 | 4.5 | 76 | 370 | 5 : 50 /8 : 01 |
| " | 7 | Copolymer (7) | 0.30 | 20.6 | 4.2 | 16.5 | 4.0 | 80 | 372 | 5 : 45 /8 : 02 |
| " | 8 | " (8) | 0.25 | 21.1 | 4.0 | 17.3 | 3.9 | 82 | 375 | 5 : 59 /8 : 15 |
| " | 9 | " (9) | 0.30 | 20.9 | 4.7 | 16.1 | 4.9 | 77 | 371 | 5 : 55 /8 : 10 |
| " | 10 | Polymer (10) | 0.30 | 21.2 | 4.9 | 17.0 | 4.3 | 80 | 370 | 6 : 00 /8 : 15 |
| Control | 1 | NSF (Note 2) | 0.40 | 21.1 | 4.1 | 10.5 | 3.7 | 50 | 373 | 5 : 49 /8 : 03 |
| " | 2 | LS (Note 3) | 0.40 | 21.5 | 6.4 | 12.2 | 5.1 | 57 | 342 | 7 : 32 /9 : 37 |
| " | 3 | PSA (Note 4) | 0.30 | 21.6 | 4.0 | 13.0 | 4.1 | 60 | 368 | 6 : 51 /9 :02 |

(Note 1) Residual ratio of slump (%) = $\frac{\text{Slump after 60 minutes' standing}}{\text{Slump immediately after mixing}} \times 100$

(Note 2) NSF = Naphthalenesulfonate sodium-formalin condensate

(Note 3) LS = Sodium ligninsulfonate

(Note 4) PSA = Sodium polyacrylate (average molecular weight 5,000)

It is clearly noted from the results of Table 2 that the cement dispersant used in the present invention manifests an outstanding ability to curb the slump loss without inducing any noticeable delay in hardening.

## Claims

**1.** The use of a material including a main component comprising at least one water-soluble polymer

selected from the group consisting of polymers obtained from (A) 0.1 to 100 mol% of a sulphonic acid type monomer represented by the formula I:

$$(CH_2 = \overset{\displaystyle R \atop |}{C}-CO_2--(AO)_m-B-SO_3)nX \qquad (I)$$

wherein: R stands for a hydrogen atom or a methyl group; n = 1 or 2, when n = 1 X stands for a hydrogen atom, a monovalent metallic atom, an ammonium group, or an organic amine group and when n = 2 X stands for a divalent metallic atom; A and B independently stand for an alkylene group of 2 to 4 carbon atoms; m stands for 0 or an integer of the value of 1 to 100; and the alkylene oxide group of 2 to 4 carbon atoms in the portion, $(AO)_m$ may be bound in any desired sequence; and (B) 99.9 to 0 mol% of another monomer copolymerisable with the sulphonic acid type monomer, and polymers obtained by neutralising the polymers with an alkaline substance, as a cement dispersant.

**2.** The use of a material as claimed in Claim 1, characterised in that A and B in Formula I independently stand for an alkylene group of 2 or 3 carbon atoms.

**3.** The use of a material as claimed in Claim 2, characterised in that A in Formula I stands for an ethylene group.

**4.** The use of a material as claimed in any preceding Claim, characterised in that m in Formula I stands for 0 or an integer of the value of 1 to 50.

**5.** The use of a material as claimed in any preceding Claim, characterised in that the other copolymerisable monomer (B) is used in an amount in the range of 99 to 0 mol%, and the sulphonic acid type monomer (A) is used in an amount of the range of 1 to 100 mol%.

**6.** The use of a material as claimed in any preceding Claim characterised in that X in Formula I stands for a hydrogen atom, an alkali metal atom, and an alkaline earth metal atom, or an alkanolamine group.

**7.** The use of a material as claimed in Claim 6, characterised in that X in Formula I is sodium or potassium or calcium or magnesium.

**8.** The use of a material as claimed in Claim 6, characterised in that X in Formula I is a monoethanolamine group, diethanolamine group, or triethanolamine group.

**9.** The use of a material as claimed in any preceding Claim, characterised in that the copolymerisable monomer is at least one member selected from the group consisting of alkyl (meth)acrylates having alkyl groups of 1 to 20 carbon atoms, alkoxyalkylene glycol (meth)acrylates having alkoxy group of 1 to 20 carbon atoms, acrylic acid, salts of acrylic acid, methacrylic acid, salts of methacrylic acid, and hydroxyalkyl (meth)acrylates.

**10.** The use of a material as claimed in Claim 9, characterised in that the copolymerisable monomer is sodium acrylate or sodium methacrylate.

**11.** The use of a material as claimed in any preceding Claim, characterised in that the other copolymerisable monomer (B) is used in an amount in the range of 90 to 0mol%, and the sulphonic acid type monomer (A) is used in an amount in the range of 10 to 100 mol%.

**12.** A process for dispersing cement in water characterised by the use of a dispersant including a main component comprising at least one water-soluble polymer selected from the group consisting of polymers obtained from (A) 0.1 to 100 mol% of a sulphonic acid type monomer represented by the formula I:

$$(CH_2 = \overset{\displaystyle R}{\overset{|}{C}}-CO_2--(AO)_m-B-SO_3)nX \qquad (I)$$

wherein: R stands for a hydrogen atom or a methyl group; n = 1 or 2, when n = 1 X stands for a hydrogen atom, a monovalent metallic atom, an ammonium group, or an organic amine group and when n = 2 X stands for a divalent metallic atom; A and B independently stand for an alkylene group of 2 to 4 carbon atoms; m stands for 0 or an integer of the value of 1 to 100; and the alkylene oxide group of 2 to 4 carbon atoms in the portion, $(AO)_m$ may be bound in any desired sequence; and (B) 99.9 to 0 mol% of another monomer copolymerisable with sulphonic acid type monomer, and polymers obtained by neutralising the polymers with an alkaline substance.

**Patentansprüche**

1. Verwendung eines Materials mit einer Hauptkomponente, welche wenigstens ein wasserlösliches Polymer enthält, das aus der Gruppe aus Polymeren ausgewählt ist, die erhalten werden aus
   (A) 0,1 bis 100 Mol% eines Monomers vom Sulfonsäuretyp, dargestellt durch die Formel I:

   $$(I) \qquad (CH_2 = \overset{\displaystyle R}{\overset{|}{C}}-CO_2--(AO)_m-B-SO_3)nX$$

   in welcher: R für ein Wasserstoffatom oder eine Methylgruppe steht; n = 1 oder 2 ist, wenn n = 1 ist, steht X für ein Wasserstoffatom, ein monovalentes Metallatom, eine Ammoniumgruppe oder eine organische Amingruppe, und wenn n = 2 ist, steht X für ein divalentes Metallatom; A und B unabhängig voneinander für eine Alkylengruppe von 2 bis 4 Kohlenstoffatomen stehen; m für 0 oder einen ganzzahligen Wert von 1 bis 100 steht; und die Alkylenoxidgruppe von 2 bis 4 Kohlenstoffatomen in dem Teil $(AO)_m$ in jeder gewünschten Folge gebunden sein kann;
   und
   (B) 99,9 bis 0 Mol% eines anderen mit dem Sulfonsäuremonomer copolymerisierbaren Monomers, und Polymeren, die durch Neutralisieren der Polymere mit Alkali erhalten werden,
   als Dispergiermittel für Zement.

2. Verwendung eines Materials nach Anspruch 1, dadurch gekennzeichnet, daß A und B in Formel I unabhängig voneinander für eine Alkylengruppe mit 2 oder 3 Kohlenstoffatomen stehen.

3. Verwendung eines Materials nach Anspruch 2, dadurch gekennzeichnet, daß A in Formel I für eine Ethylengruppe steht.

4. Verwendung eines Materials nach einem der vorstehenden Ansprüche, dadurch gekennzeichnet, daß m in Formel I für 0 oder einen ganzzahligen Wert von 1 bis 50 steht.

5. Verwendung eines Materials nach einem der vorstehenden Ansprüche, dadurch gekennzeichnet, daß das andere copolymerisierbare Monomer (B) in einem Anteil im Bereich von 99 bis 0 Mol% verwendet wird und das Monomer (A) vom Sulfonsäuretyp in einer Menge im Bereich von 1 bis 100 Mol% verwendet wird.

6. Verwendung eines Materials nach einem der vorstehenden Ansprüche, dadurch gekennzeichnet, daß X in Formel I für ein Wasserstoffatom, ein Alkalimetallatom und ein Erdalkalimetallatom oder eine Alkanolamingruppe steht.

7. Verwendung eines Materials nach Anspruch 6, dadurch gekennzeichnet, daß X in Formel I Natrium oder Kalium oder Calcium oder Magnesium ist.

**8.** Verwendung eines Materials nach Anspruch 6, dadurch gekennzeichnet, daß X in Formel I eine Monoethanolamingruppe, Diethanolamingruppe oder Triethanolamingruppe ist.

**9.** Verwendung eines Materials nach einem der vorstehenden Ansprüche, dadurch gekennzeichnet, daß das copolymerisierbare Monomer wenigstens ein aus der aus Alkyl(meth)acrylaten mit Alkylgruppen von 1 bis 20 Kohlenstoffatomen, Alkoxyalkylenglykol(meth)acrylaten mit Alkoxygruppen von 1 bis 20 Kohlenstoffatomen, Acrylsäure, Salzen der Acrylsäure, Methacrylsäure, Salzen der Methacrylsäure und Hydroxyalkyl(meth)acrylaten bestehenden Gruppe ausgewähltes Mitglied ist.

**10.** Verwendung eines Materials nach Anspruch 9, dadurch gekennzeichnet, daß das copolymerisierbare Monomer Natriumacrylat oder Natriummethacrylat ist.

**11.** Verwendung eines Materials nach einem der vorstehenden Ansprüche, dadurch gekennzeichnet, daß das andere copolymerisierbare Monomer (B) in einer Menge im Bereich von 90 bis 0 Mol% verwendet wird und das Monomer (A) vom Sulfonsäuretyp in einer Menge im Bereich von 10 bis 100 Mol% verwendet wird.

**12.** Verfahren zum Dispergieren von Zement in Wasser, gekennzeichnet durch die Verwendung eines Dispergiermittels mit einer Hauptkomponente, die wenigstens ein wasserlösliches Polymer enthält, das aus der Gruppe aus Polymeren ausgewählt ist, die erhalten werden aus

(A) 0,1 bis 100 Mol% eines Monomers vom Sulfonsäuretyp, dargestellt durch die Formel I:

$$(CH_2 = \overset{\overset{\displaystyle R}{|}}{C}-CO_2--(AO)_m-B-SO_3)nX$$

in welcher: R für ein Wasserstoffatom oder eine Methylgruppe steht; N = 1 oder 2 ist, wenn n = 1 ist, steht X für ein Wasserstoffatom, ein monovalentes Metallatom, eine Ammoniumgruppe oder eine organische Amingruppe, und wenn n = 2 ist, steht X für ein divalentes Metallatom; A und B unabhängig voneinander für eine Alkylengruppe von 2 bis 4 Kohlenstoffatomen stehen; m für 0 oder einen ganzzahligen Wert von 1 bis 100 steht; und die Alkylenoxidgruppe von 2 bis 4 Kohlenstoffatomen in dem Teil (A0)m in jeder gewünschten Folge gebunden sein kann; und

(B) 99,9 bis 0 Mol% eines anderen mit dem Sulfonsäuremonomer copolymerisierbaren Monomers, und Polymeren, die durch Neutralisieren der Polymere mit Alkali erhalten werden.

## Revendications

**1.** Utilisation d'une matière incluant un composant principal comprenant au moins un polymère soluble dans l'eau choisi dans la classe consistant en les polymères obtenus à partir (A) de 0,1 à 100 moles % d'un monomère de type acide sulfonique représenté par la formule I :

$$(CH_2 = \overset{\overset{\displaystyle R}{|}}{C}-CO_2-(AO)_m-B-SO_3)_nX \qquad (I)$$

où R représente un atome d'hydrogène ou un groupe méthyle; n = 1 ou 2, quand n = 1, X représente un atome d'hydrogène, un atome métallique monovalent, un groupe ammonium ou un groupe amine organique et quand n = 2, X représente un atome métallique divalent; A et B représentent indépendamment un groupe alkylène de 2 à 4 atomes de carbone; m représente 0 ou un nombre entier d'une valeur 1 à 100; et le groupe oxyde d'alkylène de 2 à 4 atomes de carbone dans l'unité $(AO)_m$ peut être lié dans toute séquence désirée; et (B) de 99,9 à 0 moles % d'un autre monomère copolymérisable avec le monomère de type acide sulfonique, et les polymères obtenus par neutralisation des polymères avec une substance alcaline, comme dispersant pour le ciment.

2. Utilisation d'une matière selon la revendication 1, caractérisée en ce que A et B dans la formule I représentent indépendamment un groupe alkylène de 2 ou 3 atomes de carbone.

3. Utilisation d'une matière selon la revendication 2, caractérisée en ce que A dans la formule I représente un groupe éthylène.

4. Utilisation d'une matière selon l'une quelconque des revendications précédentes, caractérisée en ce que m dans la formule I représente 0 ou un nombre entier d'une valeur 1 à 50.

5. Utilisation d'une matière selon l'une quelconque des revendications précédentes, caractérisée en ce que l'autre monomère copolymérisable (B) est utilisé en une quantité de l'intervalle de 99 à 0 moles %, et le monomère de type acide sulfonique (A) est utilisé en une quantité de l'intervalle de 1 à 100 moles %.

6. Utilisation d'une matière selon l'une quelconque des revendications précédentes, caractérisée en ce que X dans la formule I représente un atome d'hydrogène ou un atome de métal alcalin, ou un atome de métal alcalinoterreux ou un groupe alkanolamine.

7. Utilisation d'une matière selon la revendication 6, caractérisée en ce que X dans la formule I est sodium ou potassium, ou calcium ou magnésium.

8. Utilisation d'une matière selon la revendication 6, caractérisée en ce que X dans la formule I est un groupe monoéthanolamine, un groupe diéthanolamine ou un groupe triéthanolamine.

9. Utilisation d'une matière selon l'une quelconque des revendications précédentes, caractérisée en ce que le monomère copolymérisable est au moins un membre choisi dans la classe consistant en les (méth)acrylates d'alkyle ayant des groupes alkyle de 1 à 20 atomes de carbone, les (méth)acrylates d'alkoxyalkylène glycols ayant un groupe alkoxy de 1 à 20 atomes de carbone, l'acide acrylique, les sels de l'acide acrylique, l'acide méthacrylique, les sels de l'acide méthacrylique et les (méth)acrylates d'hydroxyalkyle.

10. Utilisation d'une matière selon la revendication 9, caractérisée en ce que le monomère copolymérisable est l'acrylate de sodium ou le méthacrylate de sodium.

11. Utilisation d'une matière selon l'une quelconque des revendications précédentes, caractérisée en ce que l'autre monomère copolymérisable (B) est utilisé en une quantité de l'intervalle de 90 à 0 moles %, et le monomère de type acide sulfonique (A) est utilisé en une quantité de l'intervalle de 10 à 100 moles %.

12. Procédé pour la dispersion du ciment dans l'eau, caractérisé par l'utilisation d'un dispersant incluant un composant principal comprenant au moins un polymère soluble dans l'eau choisi dans la classe consistant en les polymères obtenus à partir (a) de 0,1 à 100 moles % d'un monomère de type acide sulfonique, représenté par la formule I :

$$(CH_2 = \overset{\displaystyle R}{\overset{|}{C}}-CO_2-(AO)_m-B-SO_3)_nX \qquad (I)$$

où R représente un atome d'hydrogène ou un groupe méthyle; n = 1 ou 2, quand n = 1, X représente un atome d'hydrogène, un atome métallique monovalent, un groupe ammonium ou un groupe amine organique et quand n = 2, X représente un atome métallique divalent; A et B représentent indépendamment un groupe oxyde d'alkylène de 2 à 4 atomes de carbone; m représente 0 ou un nombre entier d'une valeur 1 à 100; et le groupe oxyde d'alkylène de 2 à 4 atomes de carbone dans l'unité $(AO)_m$ peut être lié dans toute séquence désirée; et (B) de 99,9 à 0 moles % d'un autre monomère copolymérisable avec le monomère de type acide sulfonique, et les polymères obtenus par neutralisation des polymères avec une substance alcaline.